(19) Europäisches Patentamt
European Patent Office
Office européen des brevets

(11) **EP 2 520 554 A1**

(12) **EUROPEAN PATENT APPLICATION**
published in accordance with Art. 153(4) EPC

(43) Date of publication:
**07.11.2012 Bulletin 2012/45**

(21) Application number: **10841071.3**

(22) Date of filing: **24.12.2010**

(51) Int Cl.:
**C04B 35/46** [(2006.01)]   **B01D 39/20** [(2006.01)]
**C01G 23/00** [(2006.01)]

(86) International application number:
**PCT/JP2010/073882**

(87) International publication number:
**WO 2011/081217 (07.07.2011 Gazette 2011/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2009 JP 2009297004**

(71) Applicant: **Sumitomo Chemical Company, Limited
Tokyo 104-8260 (JP)**

(72) Inventors:
• **IWASAKI, Kentaro
Niihama-shi
Ehime 792-0025 (JP)**
• **TOHMA, Tetsuro
Niihama-shi
Ehime 792-0002 (JP)**

(74) Representative: **Vossius & Partner
Siebertstrasse 4
81675 München (DE)**

(54) **METHOD FOR MANUFACTURING AN ALUMINUM TITANATE CERAMIC**

(57)   The present invention is a process for producing an aluminum titanate-based ceramics comprising a step of firing a starting material mixture containing a titanium source powder, an aluminum source powder, and a copper source.

EP 2 520 554 A1

**Description**

TECHNICAL FIELD

The present invention relates to a process for producing an aluminum titanate-base ceramics and an aluminum titanate-based ceramics, and more particularly to a process for producing an aluminum titanate-based ceramics by firing a starting material mixture containing a titanium source powder, an aluminum source powder and the like, and an aluminum titanate ceramics which is obtained by the process and has small change in volume by heat.

BACKGROUND ART

An aluminum titanate-based ceramics is a ceramics containing titanium and aluminum as constituent elements and having a crystal pattern of aluminum titanate in an x-ray diffraction spectrum, and is known as a ceramics excellent in heat resistance. The aluminum titanate-based ceramics has conventionally been employed as a tool for sintering such as a crucible. In recent years, the industrial utility value of the aluminum titanate-based ceramics has been increasing as a material composing a ceramic filter (e.g., a Diesel Particulate Filter, hereinafter also referred to as a DPF) for trapping fine carbon particles contained in exhaust gas discharged out of an internal combustion engine such as a diesel engine.

International Publication No. 05/105704 discloses production of an aluminum magnesium titanate crystal structure, which is an aluminum titanate-based ceramics, obtained by firing a starting material mixture containing a titanium-containing compound such as a titania ceramics, an aluminum-containing compound such as an alumina ceramics, and a Mg-containing compound such as a magnesia ceramics.

Particularly, in the case an aluminum titanate-based ceramics is employed for a material for a DPF, in order to suppress breakage and deterioration of filter characteristics due to thermal shock as much as possible, the aluminum titanate-based ceramics is required to have small change in volume by heat.

DISCLOSURE OF THE INVENTION

Accordingly, the present invention aims to provide a new process by which an aluminum titanate-based ceramics with small change in volume by heat can be produced, and an aluminum titante-based ceramics which can be obtained by the process and has small change in volume by heat.

The present invention provides a process for producing an aluminum titanate-based ceramics comprising a step of firing a starting material mixture containing a titanium source powder, an aluminum source powder, and a copper source. The copper source is preferably a powder. The copper source is preferably metal copper or copper oxide, more preferably a metal copper powder.

The starting material mixture preferably contains 0.1 to 20 parts by mass of the copper source expressed on cupric oxide [CuO] basis to 100 parts by mass in total of the titanium source powder expressed on titania [$TiO_2$] basis and the aluminum source powder expressed on alumina [$Al_2O_3$] basis.

The starting material mixture preferably further contains a magnesium source powder. The starting material mixture preferably contains 0.1 to 10 parts by mass of the magnesium source powder expressed on magnesia [MgO] basis to 100 parts by mass in total of the titanium source powder expressed on titania [$TiO_2$] basis and the aluminum source powder expressed on alumina [$Al_2O_3$] basis.

The starting material mixture preferably further contains a silicon source powder. The silicon source powder is preferably glass frit. The starting material mixture preferably contains 0.1 to 20 parts by mass of the silicon source powder expressed on silica [$SiO_2$] basis to 100 parts by mass in total of the titanium source powder expressed on titania [$TiO_2$] basis and the aluminum source powder expressed on alumina [$Al_2O_3$] basis.

The starting material mixture preferably contains 30 to 70 parts by mass of the titanium source powder expressed on titania [$TiO_2$] basis to 100 parts by mass in total of the titanium source powder expressed on titania [$TiO_2$] basis and the aluminum source powder expressed on alumina [$Al_2O_3$] basis.

The firing temperature is preferably in a range of 1300 to 1650°C.

The present invention also provides an aluminum titanate-based ceramics containing a titanium element, an aluminum element, and a copper element. In the aluminum titanate-based ceramics of the present invention, the copper element content expressed on cupric oxide [CuO] basis is preferably 0.1 to 20 parts by mass to 100 parts by mass in total of the titanium element content expressed on titania [$TiO_2$] basis and the aluminum element content expressed on alumina [$Al_2O_3$] basis.

The aluminum titanate-based ceramics of the present invention preferably further contains a magnesium element. In the aluminum titanate-based ceramics of the present invention, the magnesium element content expressed on magnesia [MgO] basis is preferably 0.1 to 10 parts by mass to 100 parts by mass in total of the titanium element content

expressed on titania [$TiO_2$] basis and the aluminum element content expressed on alumina [$Al_2O_3$] basis.

The aluminum titanate-based ceramics of the present invention preferably further contains a silicon element. In the aluminum titanate-based ceramics of the present invention, the silicon element content expressed on silica [$SiO_2$] basis is preferably 0.1 to 20 parts by mass to 100 parts by mass in total of the titanium element content expressed on titania [$TiO_2$] basis and the aluminum element content expressed on alumina [$Al_2O_3$] basis.

In the aluminum titanate-based ceramics of the present invention, the titanium element content expressed on titania [$TiO_2$] basis is preferably 30 to 70 parts by mass to 100 parts by mass in total of the titanium element content expressed on titania [$TiO_2$] basis and the aluminum element content expressed on alumina [$Al_2O_3$] basis.

The aluminum titanate-based ceramics of the present invention is preferably a fired product obtained by being fired at a temperature in a range of 1300 to 1650°C.

The aluminum titanate-based ceramics of the present invention is preferably a shaped body having a honeycomb structure. The shaped body is preferably a diesel particulate filter (hereinafter also referred to as a DPF).

BEST MODE FOR CARRYING OUT THE INVENTION

<Process for producing an aluminum titanate-based ceramics>

A process for producing an aluminum titanate-based ceramics of the present invention includes a step of firing a starting material mixture containing one or more kinds of titanium source powder, one or more kinds of aluminum source powder, and one or more kinds of copper sources. An aluminum titanate-based ceramics obtained by the process of the present invention is a fired body of an aluminum titanate crystal and in the case the starting material mixture further contains one or more kinds of magnesium source powder, it is a fired body of an aluminum magnesium titanate crystal.

[Starting material mixture]

(Titanium source powder)

A titanium source powder is not particularly limited as long as it is a powder containing a titanium element, but it is preferably a powder of titanium oxide. Examples of the titanium oxide include titanium(IV) oxide, titanium(TII) oxide, and titanium(II) oxide, and titanium(IV) oxide is preferable. Titanium(IV) oxide may be amorphous or crystalline. Examples of the crystal type of titanium(IV) oxide include anatase type, rutile type, and brookite type. Anatase type or rutile type titanium(IV) oxide is more preferable.

A powder of a compound which is led to titania (titanium oxide) by firing in air may also be used as a titanium source powder. Examples of such a compound include titanium salts, titanium alkoxides, titanium hydroxide, titanium nitride, titanium sulfide, and titanium metal.

Specific examples of titanium salts include titanium trichloride, titanium tetrachloride, titanium(IV) sulfide, titanium(VI) sulfide, and titanium(IV) sulfate. Specific examples of titanium alkoxides include titanium(IV) ethoxide, titanium (IV) methoxide, titanium(IV) tert-butoxide, titanium(IV) isobutoxide, titanium(IV) n-propoxide, titanium(IV) tetraisopropoxide, and chelate compounds of these.

The titanium source powder may contain a trace constituent inevitably contained in its production process.

The particle diameter of the titanium source powder is not particularly limited, but it is preferable that its particle diameter corresponding to a cumulative percentage of 50 % on a volume basis (D50), which is measured by a laser diffractometry, is within a range of 0.1 to 20 $\mu$m. From the viewpoint of efficient production of the aluminum titanate-based crystal, D50 of the titanium source powder is more preferably within a range of 0.1 to 10 $\mu$m and further preferably within a range of 0.1 to 1 $\mu$m. Further, the particle diameter corresponding to a cumulative percentage of 90 % on a volume basis (D90) of the titanium source powder, which is measured by a laser diffractometry, is preferably within a range of 0.1 to 20 $\mu$m, more preferably within a range of 0.1 to 10 $\mu$m, and further preferably within a range of 0.2 to 1.5 $\mu$m.

(Aluminum source powder)

An aluminum source powder is not particularly limited as long as it is a powder containing an aluminum element, but it is preferably a powder of alumina (aluminum oxide). Alumina may be amorphous or crystalline. Examples of the crystal type of alumina include $\gamma$ type, $\delta$ type, $\theta$ type, and $\alpha$ type. Particularly, $\alpha$ type alumina is preferably used.

A powder of a compound which is led to alumina by firing in air may also be used as an aluminum source powder. Examples of such a compound include aluminum salts, aluminum alkoxides, aluminum hydroxide, and aluminum metal.

Aluminum salts may be inorganic salts with inorganic acids or organic salts with organic acids. Examples of aluminum inorganic salts include aluminum nitrate salts such as aluminum nitrate and ammonium aluminum nitrate; and aluminum carbonate salts such as ammonium aluminum carbonate. Examples of organic aluminum salts include aluminum oxalate, aluminum acetate, aluminum stearate, aluminum lactate, and aluminum laurate.

Examples of aluminum alkoxides include aluminum isopropoxide, aluminum ethoxide, aluminum sec-butoxide, and aluminum tert-butoxide.

Aluminum hydroxide may be amorphous or crystalline. Examples of the crystal type of aluminum hydroxide include gibbsite type, bayerite type, nordstrandite type, boehmite type, and pseudoboehmite type. Examples of amorphous aluminum hydroxide include hydrolyzed aluminum substances obtained by hydrolyzing aqueous solutions of water-soluble aluminum compounds such as aluminum salts and aluminum alkoxides.

The aluminum source powder may contain a trace constituent inevitably contained in its production process.

The particle diameter of the aluminum source powder is not particularly limited, but it is preferable that its particle diameter corresponding to a cumulative percentage of 50 % on a volume basis (D50), which is measured by a laser diffractometry, is within a range of 1 to 100 $\mu$m. From the viewpoint of efficient production of the aluminum titanate-based crystal, D50 of the aluminum source powder is more preferably within a range of 10 to 80 $\mu$m and further preferably within a range of 20 to 60 $\mu$m. The particle diameter corresponding to a cumulative percentage of 90 % on a volume basis (D90) of the aluminum source powder, which is measured by a laser diffractometry, is preferably 1 to 200 $\mu$m, more preferably 10 to 150 $\mu$m, and further preferably 30 to 100 $\mu$m.

The contents of the titanium source powder and the aluminum source powder in a starting material mixture are not particularly limited, but in general, the starting material mixture contains 30 to 70 parts by mass of the titanium source powder (consequently, 70 to 30 parts by mass of the aluminum source powder expressed on alumina basis) and preferably 40 to 60 parts by mass of the titanium source powder (consequently, 60 to 40 parts by mass of the aluminum source powder expressed on alumina basis) in 100 parts by mass in total of the titanium source powder expressed on titania [$TiO_2$] basis and the aluminum source powder expressed on alumina [$Al_2O_3$] basis.

(Copper source)

The starting material mixture further contains one or more kinds of copper sources. Firing of a starting material mixture containing a copper source makes it possible to obtain an aluminum titanate-based ceramics which contains a copper element and has small change in volume by heat.

A copper source is not particularly limited as long as it contains a copper element and examples thereof include metal copper, copper(I) oxide [$Cu_2O$, cuprous oxide], copper(II) oxide [$CuO$, cupric oxide], copper(I) hydroxide [$Cu(OH)$], and copper(II) hydroxide [$Cu(OH)_2$]. Particularly, metal copper, copper(I) oxide, and copper(II) oxide are preferably used since they can effectively decrease the thermal expansion coefficient of an aluminum titanate-based ceramics to be obtained and easily provide an aluminum titanate-based ceramics with small change in volume by heat.

A compound which is led to copper(I) oxide or copper(II) oxide by firing in air may also be used as a copper source. Examples of such a compound include copper salts.

Copper salts may be inorganic salts with inorganic acids or organic salts with organic acids. Specific examples of copper salts include copper nitrate, copper sulfate, copper chloride, copper bromide, copper iodide, copper iodate, ammonium copper chloride, copper oxychloride, copper acetate, copper formate, copper carbonate, copper oxalate, copper citrate, and copper phosphate.

The copper source may contain a trace constituent inevitably contained in its production process.

A copper source is preferably contained in a powder state in a starting material mixture. The particle diameter of the copper source powder is not particularly limited, but it is preferable that its particle diameter corresponding to a cumulative percentage of 50 % on a volume basis (D50), which is measured by a laser diffractometry, is within a range of 1 to 200 $\mu$m. D50 of the copper source powder is more preferably within a range of 5 to 100 $\mu$m and further preferably within a range of 10 to 50 $\mu$m. The particle diameter corresponding to a cumulative percentage of 90 % on a volume basis (D90) of the copper source powder, which is measured by a laser diffractometry, is preferably 10 to 500 $\mu$m, more preferably 20 to 300 $\mu$m, and further preferably 30 to 200 $\mu$m.

The content of the copper source in a starting material mixture is preferably 0.1 to 20 parts by mass and more preferably 0.5 to 10 parts by mass expressed on cupric oxide [$CuO$] basis to 100 parts by mass in total of the titanium source powder expressed on titania [$TiO_2$] basis and the aluminum source powder expressed on alumina [$Al_2O_3$] basis. Adjustment of the content of the copper source within the range makes it possible to easily obtain an aluminum titanate-based ceramics with small change in volume by heat.

(Magnesium source powder)

The starting material mixture may further contain one or more kinds of magnesium source powder. In this case, by the process of the present invention, a fired body of an aluminum magnesium titanate crystal can be obtained as an aluminum titanate-based ceramics. A magnesium source powder is not particularly limited as long as it is a powder containing a magnesium element, and examples thereof include a powder of magnesia (magnesium oxide) and a powder of a compound which can be led to magnesia by firing in air. Particularly, magnesia is preferable.

Examples of a compound which can be led to magnesia by firing in air include magnesium salts, magnesium alkoxides, magnesium hydroxide, magnesium nitride, and metal magnesium. Specific examples of magnesium salts include magnesium chloride, magnesium perchlorate, magnesium phosphate, magnesium pyrophosphate, magnesium oxalate, magnesium nitrate, magnesium carbonate, magnesium acetate, magnesium sulfate, magnesium citrate, magnesium lactate, magnesium stearate, magnesium salicylate, magnesium myristate, magnesium gluconate, magnesium dimethacrylate, and magnesium benzoate. Specific examples of magnesium alkoxides include magnesium methoxide and magnesium ethoxide.

A powder which also serves as an aluminum source powder may also be used as a magnesium source powder. Examples of such a powder include a powder of magnesia spinel ($MgAl_2O_4$).

The magnesium source powder may contain a trace constituent inevitably contained in its production process.

The particle diameter of the magnesium source powder is not particularly limited, but it is preferable that its particle diameter corresponding to a cumulative percentage of 50 % on a volume basis (D50), which is measured by a laser diffractometry, is within a range of 0.5 to 20 $\mu$m. From the viewpoint of efficient production of the aluminum titanate-based crystal, D50 of the magnesium source powder is more preferably within a range of 1 to 10 $\mu$m. The particle diameter corresponding to a cumulative percentage of 90 % on a volume basis (D90) of the magnesium source powder, which is measured by a laser diffractometry, is preferably 1 to 50 $\mu$m and more preferably 3 to 30 $\mu$m.

In the case a starting material mixture contains a magnesium source powder, the content of the magnesium source powder in the starting material mixture is preferably 0.1 to 10 parts by mass and more preferably 0.1 to 8 parts by mass expressed on magnesia [MgO] basis to 100 parts by mass in total of the titanium source powder expressed on titania [$TiO_2$] basis and the aluminum source powder expressed on alumina [$Al_2O_3$] basis.

(Silicon source powder)

The starting material mixture may further contain one or more kinds of silicon source powder. A silicon source powder is a powder of a compound containing a silicon element. Use of a silicon source powder in combination makes it possible to obtain an aluminum titanate-based ceramics further improved in heat resistance. Examples of a silicon source powder include silicon oxide powders such as silicon dioxide, silicon monoxide, and the like.

A powder of a compound which is led to silicon oxide (silica) by firing in air may also be used as a silicon source powder. Examples of such a compound include silicic acid, silicon carbide, silicon nitride, silicon sulfide, silicon tetrachloride, silicon acetate, sodium silicate, sodium orthosilicate, feldspar, complex oxides containing silicon and aluminum, and glass frit. Particularly, from the viewpoint of easiness of industrial availability, feldspar and glass frit are preferably used and in terms of easiness of industrial availability and composition stability, glass frit is more preferably used. Glass frit means flaky or powdery glass obtained by crushing glass.

In the case glass frit is used as a silicon source powder, in terms of improvement of heat resistant decomposability of an aluminum titanate-based ceramics to be obtained, glass frit with a deformation point of 700°C or higher is preferably used. In the present invention, the deformation point of glass frit is defined as a temperature (°C) at which expansion is stopped and shrinkage successively starts when expansion of the glass frit is measured from a low temperature by using a thermo-mechanical analyzer (TMA: Thermo Mechanical Analysis).

Common silicate glass containing silicic acid [$SiO_2$] as a main component may be used for glass composing glass frit. Herein, a main component means a component contained in an amount of 50% by mass or more in the entire components. Glass composing glass frit may contain, as other constituent components, alumina [$Al_2O_3$], sodium oxide [$Na_2O$], potassium oxide [$K_2O$], calcium oxide [CaO], magnesia [MgO], and the like, similarly to common silicate glass. Glass composing glass frit may further contain $ZrO_2$ to improve the hydrothermal resistance of the glass itself.

A powder which also serves as an aluminum source powder may also be used as a silicon source powder. Examples of such a powder include a powder of the above-mentioned feldspar.

The powdered silicon source may contain a trace constituent inevitably contained in its production process.

The particle diameter of the silicon source powder is not particularly limited, but it is preferable that its particle diameter corresponding to a cumulative percentage of 50 % on a volume basis (D50), which is measured by a laser diffractometry, is within a range of 0.5 to 30 $\mu$m. From the viewpoint of efficient production of the aluminum titanate-based crystal, D50 of the silicon source powder is more preferably within a range of 1 to 20 $\mu$m. The particle diameter corresponding to a cumulative percentage of 90 % on a volume basis (D90) of the silicon source powder, which is measured by a laser diffractometry, is preferably 1 to 100 $\mu$m and more preferably 5 to 50$\mu$m.

In the case a starting material mixture contains a silicon source powder, the content of the silicon source powder in the starting material mixture is generally 0.1 to 20 parts by mass and preferably 0.1 to 10 parts by mass expressed on silica [$SiO_2$] basis to 100 parts by mass in total of the titanium source powder expressed on titania [$TiO_2$] basis and the aluminum source powder expressed on [$Al_2O_3$] basis.

In the present invention, a compound containing two or more metal elements among titanium, aluminum, copper, magnesium, and silicon as constituent components, similarly to the above-mentioned magnesia spinel ($MgAl_2O_4$), feld-spar, and complex oxides such as aluminum titanate and aluminum magnesium titanate, may be used as a metal source starting material. In this case, use of such a compound is regarded same as mixing of respective metal source starting materials. Based on such a consideration, the contents of an aluminum source powder, a titanium source powder, a copper source, a magnesium source powder, and a silicon source powder in a starting material mixture are adjusted to be within the above-mentioned ranges.

[Preparation of starting material mixture]

In a process of the present invention, a starting material mixture can be obtained generally by mixing the above-mentioned respective metal source starting materials. A mixing method may be either a method of mixing in a dry atmosphere (a dry mixing method) or a method of mixing in a wet atmosphere (a wet mixing method).

(1) Dry mixing method

In the case of mixing in a dry atmosphere, for example, the above-mentioned respective metal source starting materials may be mixed and stirred in a pulverization container without being dispersed in a liquid medium and the metal source starting materials may be pulverized simultaneously by stirring the raw materials in the pulverization container in the coexistence of pulverization media.
A container made of a metal material such as stainless steel is generally used as the pulverization container. The inner surface of the container may be coated with a fluororesin, a silicon resin, or a urethane resin. The inner volume of the pulverization container is generally 1 to 4 times by volume and preferably 1.2 to 3 times by volume as much as the total volume of the metal source starting materials and pulverization media.
Examples of the pulverization media include alumina beads and zirconia beads with a diameter of 1 to 100 mm and preferably 5 to 50 mm. The amount of the pulverization media to be used is generally 1 to 1000 times by mass and preferably 5 to 100 times by mass as much as the total amount of the metal source starting materials.
In the case pulverization of the metal source starting materials is carried out simultaneously with mixing, for example, the metal source starting materials are fed to the pulverization container together with the pulverization media and thereafter, the pulverization container is vibrated or rotated to mix and simultaneously pulverize the metal source starting materials. A common pulverizer such as a vibration mill, a ball mill, a planetary mill, or a pin mill such as a high speed rotating pulverizer may be used for vibrating or rotating the pulverization container, and a vibration mill is preferably used in terms of easiness of operation in an industrial scale. In the case the pulverization container is vibrated, the amplitude is generally 2 to 20 mm and preferably 12 mm or less. Pulverization may be carried out in a continuous manner or a batch manner and in terms of easiness of operation in an industrial scale, it is preferable to carry out pulverization in a continuous manner.
The time taken for the pulverization is generally 1 minute to 6 hours and preferably 1.5 minutes to 2 hours.
To pulverize metal source starting materials in a dry condition, one or more kinds of additives such as a pulverization aid and a deflocculant may be added. Examples of a pulverization aid include alcohols such as methanol, ethanol, and propanol; glycols such as propylene glycol, polypropylene glycol, and ethylene glycol; amines such as triethanolamine; higher fatty acids such as palmitic acid, stearic acid, and oleic acid; and carbon materials such as carbon black and graphite.
When additives are used, the total amount thereof to be used is generally 0.1 to 10 parts by mass, preferably 0.5 to 5 parts by mass, and more preferably 0.75 to 2 parts by mass to 100 parts by mass in total of the metal source starting materials.

(2) Wet mixing method

In the case of mixing in a wet atmosphere, for example, some of the above-mentioned respective metal source starting materials may be mixed in the state of being dispersed in a solvent with other metal source starting materials and generally, a silicon source powder is mixed in the state of being dispersed in a solvent with other metal source starting materials. In such a case, water is generally used as the solvent and ion-exchanged water is preferably used due to small amount of impurities. The amount of the solvent to be used is generally 20 to 1000 parts by mass and preferably 30 to 300 parts by mass to 100 parts by mass in total of the metal source starting materials.
At the time of mixing in a wet condition, a dispersant may be added to the solvent. Examples of the dispersant include inorganic acids such as nitric acid, hydrochloric acid, and sulfuric acid; organic acids such as oxalic acid, citric acid, acetic acid, malic acid, and lactic acid; alcohols such as methanol, ethanol, and propanol; and surfactants such as ammonium polycarbonate. In the case a dispersant is used, the amount of the dispersant to be used is generally 0.1 to 20 parts by mass and preferably 0.2 to 10 parts by mass to 100 parts by mass of the solvent.

In the wet mixing method, the metal source starting materials other than the silicon source powder (that is, a titanium source powder, an aluminum source powder, a copper source, and a magnesium source powder) may sometimes be mixed in the state of being dissolved in a solvent depending on their types; however, these metal source starting materials dissolved in the solvent are again precipitated in form of a solid matter by distilling the solvent off.

In the wet mixing method, it is preferable to carry out the mixing by using a pulverizer such as a medium stirring mill, a ball mill, or a vibration mill. A titanium source powder, an aluminum source powder, a copper source, a magnesium source powder, and a silicon source powder such as glass frit are mixed all together while being pulverized by mixing them with a pulverizer to give a starting material mixture with more uniform composition.

The wet mixing method may be, for example, a method including only a stirring treatment in a common liquid solvent. Examples of the liquid solvent include alcohols such as methanol, ethanol, butanol, and propanol; glycols such as propylene glycol, polypropylene glycol, and ethylene glycol; and ion-exchanged water and ion-exchanged water is more preferable.

Also in the wet mixing method, the metal source starting materials may simultaneously be pulverized by stirring the starting materials in a pulverization container in the coexistence of pulverization media. For example, the metal source starting materials and pulverization media may be fed to a pulverization container and thereafter, the pulverization container may be vibrated or rotated to carry out pulverization.

A container made of a metal material such as stainless steel is generally used as the pulverization container. The inner surface of the container may be coated with a fluororesin, a silicon resin, or a urethane resin. The inner volume of the pulverization container is generally 1 to 4 times by volume and preferably 1.2 to 3 times by volume as much as the total volume of the metal source starting materials and pulverization media.

Examples of the pulverization media include alumina beads and zirconia beads with a diameter of 1 to 100 mm and preferably 5 to 50 mm. The amount of the pulverization media to be used is generally 1 to 1000 times by mass and preferably 5 to 100 times by mass as much as the total amount of the metal source starting materials.

A common pulverizer such as a vibration mill, a ball mill, a planetary mill, or a pin mill such as a high speed rotating pulverizer may be used for vibrating or rotating the pulverization container, and a vibration mill is preferably used in terms of easiness of operation in an industrial scale. In the case the pulverization container is vibrated, the amplitude is generally 2 to 20 mm and preferably 12 mm or less. Pulverization may be carried out in a continuous manner or a batch manner and in terms of easiness of operation in an industrial scale, it is preferable to carry out pulverization in a continuous manner. The time taken for the pulverization is generally 1 minute to 6 hours and preferably 1.5 minutes to 2 hours.

To pulverize metal source starting materials in a wet condition, one or more kinds of additives such as a pulverization aid and a deflocculant may be added besides the pulverization media.

Examples of a pulverization aid include alcohols such as methanol, ethanol, and propanol; glycols such as propylene glycol, polypropylene glycol, and ethylene glycol; amines such as triethanolamine; higher fatty acids such as palmitic acid, stearic acid, and oleic acid; and carbon materials such as carbon black and graphite. The total amount of additives to be used is generally 0.1 to 10 parts by mass, preferably 0.5 to 5 parts by mass, and more preferably 0.75 to 2 parts by mass to 100 parts by mass in total of the metal source starting materials.

A starting material mixture to be used in the present invention can be obtained by carrying out the above-mentioned mixing in a wet atmosphere and thereafter removing the solvent. The solvent is generally removed by distillation. The method for distilling the solvent off is not particularly limited and may be air drying at room temperature, vacuum drying, or heat drying. The drying method may be static drying or fluidized drying. The temperature at the time of heat drying is not particularly limited, but it is generally not lower than 50°C and not higher than 250°C. Examples of an appliance to be used for heat drying include a shelf drier, a slurry drier, and a spray drier.

[Firing of starting material mixture]

In the process of the present invention, an aluminum titanate-based ceramics is obtained by firing a powdery starting material mixture obtained in the above-mentioned manner. At the time of firing, the starting material mixture may be fired after being shaped into a desired shape or the starting material mixture may be fired in the powder state. In the latter case, the fired product obtained by firing may be shaped into a desired shape after being pulverized if necessary to obtain a shaped body. After the shaped body is obtained by firing the starting material mixture in the powder state, the shaped body may be fired further.

The firing temperature is generally 1300°C or higher and preferably 1400°C or higher and generally 1650°C or lower and preferably 1550°C or lower. The heating rate to the firing temperature is not particularly limited, but it is generally 1°C/hour to 500°C/hour. In the case a silicon source powder is used, it is preferable to carry out a step of keeping the starting material mixture at a temperature in a range of 1100 to 1300°C for 3 hours or longer before the firing step. Consequently, melting and diffusion of the silicon source powder can be accelerated. In the case the starting material mixture contains a binder and the like, the firing step includes a degreasing step for removing the binder. Typically, degreasing is carried out in the heating stage up to the firing temperature (e.g., in a temperature range of 150 to 400°C). In the degreasing step, the heating rate is preferably suppressed as much as possible.

Firing is generally carried out in atmospheric air; however, depending on the types and the amount ratios to be used of the metal source starting materials, that is, a titanium source powder, an aluminum source powder, a copper source, a magnesium source powder, and a silicon source powder, firing may be carried out in an inert gas such as nitrogen gas or argon gas and also may be carried out in a reducing gas such as carbon monoxide gas or hydrogen gas. Firing may also be carried out in an atmosphere with a lowered water vapor partial pressure.

The firing is generally carried out using a common firing furnace such as a tubular electric furnace, a box type electric furnace, a tunnel furnace, a far IR furnace, a microwave heating furnace, a shaft furnace, a reverberating furnace, a rotary furnace, or a roller hearth furnace. Firing may be carried out in a batch manner or in a continuous manner. The firing may be carried out in a static manner or a fluidizing manner.

The time taken for firing may be sufficient if the starting material mixture or its shaped body is transited into an aluminum titanate-based ceramics. The time is generally 10 minutes to 24 hours, although it differs in accordance with the amount of the starting material mixture, the style of a firing furnace, the firing temperature, the firming atmosphere, and the like.

In the case a massive aluminum titanate-based ceramics is obtained as a fired product, the fired product may be pulverized to obtain an aluminum titanate-based ceramics powder. Pulverization may be carried out, for example, by hand or using a mortar, or by using a common pulverizer such as a ball mill, a vibration mill, a planetary mill, a medium stirring mill, a pin mill, a jet mill, a hammer mill, or a roll mill. The aluminum titanate-based ceramics powder obtained by the pulverization may be classified by a common method.

By the above-mentioned method, a fired product of an aluminum titanate-based ceramics with small change in volume by heat (having a low thermal expansion coefficient) can be obtained.

[Shaping of starting material mixture and fired product]

To shape a starting material mixture before firing or to shape a fired product (an aluminum titanate-based ceramics) obtained by firing, a shaping method employed commonly may be employed and a uniaxial shaping or extrusion molding may be employed. Examples of a shaping apparatus to be employed for the shaping include a uniaxial press, an extrusion molding apparatus, a tableting machine, and a granulator.

At the time of extrusion molding, a pore-forming agent, a binder, a lubricant, a plasticizer, a dispersant, a solvent, and the like may be added to the starting material mixture to shape. Examples of a pore-forming agent include carbon materials such as graphite; resins such as polyethylene, polypropylene, and poly(methyl methacrylate); plant materials such as starch, nut husk, walnut husk, and corn; ice; and dry ice.

Examples of a binder include celluloses such as methyl cellulose, carboxymethyl cellulose, and sodium carboxymethyl cellulose; alcohols such as polyvinyl alcohol; salts such as lignin sulfonic acid salts; waxes such as paraffin wax and microcrystalline wax; and thermoplastic resins such as EVA, polyethylene, polystyrene, a liquid crystal polymer, and an engineering plastic.

Examples of a lubricant and a plasticizer include alcohols such as glycerine higher fatty acids such as caprylic acid, lauric acid, palmitic acid, alginic acid, oleic acid, and stearic acid; and stearic acid metal salts such as aluminum stearate.

Examples of the dispersant include inorganic acids such as nitric acid, hydrochloric acid, and sulfuric acid; organic acids such as oxalic acid, citric acid, acetic acid, malic acid, and lactic acid; alcohols such as methanol, ethanol, and propanol; and surfactants such as ammonium polycarbonate and polyoxyalkylene alkyl ether.

Examples of the solvent include alcohols such as methanol, ethanol, butanol, and propanol; glycols such as propylene glycol, polypropylene glycol, and ethylene glycol; and water. Particularly, water is preferable, and ion-exchanged water is more preferably used, in terms of small amount of impurities.

The shape of the shaped body is not particularly limited and examples thereof include a honeycomb structure, a spherical structure, a cubic structure, and a rectangular block structure. Among them, in the case the shaped body is employed particularly for a DPF and the like, the shaped body preferably has a honeycomb structure.

<Aluminum titanate-based ceramics>

An aluminum titanate-based ceramics of the present invention is a fired body of an aluminum titanate-based crystal (an aluminum titanate crystal or an aluminum magnesium titanate crystal) containing a copper element. The copper element-containing aluminum titanate-based ceramics of the present invention has small change in volume by heat and is hardly broken or deteriorated in characteristics by thermal shock.

In the aluminum titanate-based ceramics of the present invention, the content of the copper element is preferably 0.1 to 20 parts by mass and more preferably 0.5 to 10 parts by mass expressed on cupric oxide [CuO] basis to 100 parts by mass in total of the titanium element content expressed on titania [TiO$_2$] basis and the aluminum element content expressed on alumina [Al$_2$O$_3$] basis.

The content of the titanium element is preferably 30 to 70 parts by mass and more preferably 40 to 60 parts by mass expressed on titania [TiO$_2$] basis in 100 parts by mass in total of the titanium element content expressed on titania [TiO$_2$] basis and the aluminum element content expressed on alumina [Al$_2$O$_3$] basis.

The aluminum titanate-based ceramics of the present invention may further contain a magnesium element. The content of the magnesium element is preferably 0.1 to 10 parts by mass and more preferably 0.1 to 8 parts by mass expressed on magnesia [MgO] basis to 100 parts by mass in total of the titanium element content expressed on titania [TiO$_2$] basis and the aluminum element content expressed on alumina [Al$_2$O$_3$] basis.

The aluminum titanate-based ceramics of the present invention may further contain a silicon element and owing to this, the heat resistance can be improved. The content of the silicon element is preferably 0.1 to 20 parts by mass and more preferably 0.1 to 10 parts by mass expressed on silica [SiO$_2$] basis to 100 parts by mass in total of the titanium element content expressed on titania [TiO$_2$] basis and the aluminum element content expressed on alumina [Al$_2$O$_3$] basis.

The aluminum titanate-based ceramics of the present invention includes a crystal pattern of aluminum titanate or aluminum magnesium titanate in an x-ray diffraction spectrum and may further include other crystal patterns of silica, alumina, titania, and the like. In the case the aluminum titanate-based ceramics is aluminum magnesium titanate (Al$_{2(1-x)}$M$_{gx}$Ti$_{(1+x)}$O$_5$, a composition formula excluding copper), the value for x is 0.01 or more, preferably not less than 0.01 and not more than 0.7, and more preferably not less than 0.02 and not more than 0.5.

The aluminum titanate-based ceramics of the present invention can be produced preferably by the process of the present invention.

The aluminum titanate-based ceramics of the present invention is preferably a shaped body having a desired shape. The shape of the shaped body is not particularly limited, and examples thereof include a honeycomb structure, a spherical structure, a cubic structure, and a rectangular block structure. Among them, in the case the shaped body is employed particularly for a DPF, the shaped body preferably has a honeycomb structure.

The shaped body of the aluminum titanate-based ceramics of the present invention can be preferably employed for an exhaust gas filter (a DPF or the like) to be used for exhaust gas purification for an internal combustion engine such as a diesel engine or a gasoline engine and also for a tool for a firing furnace such as a crucible, a setter, a sagger, or a furnace material; a catalyst carrier; a ceramics filter such as a filtration filter to be used for filtering food and beverage such as beer or a permselective filter for selectively permeating gas components (e.g., carbon monoxide, carbon dioxide, nitrogen, and oxygen) generated at the time of oil refining; and electronic parts such as a substrate and a capacitor.

Hereinafter, the present invention will be described in more detail with reference to examples; however, the present invention should not be limited to these examples. Aluminum titanate conversion ratio (AT conversion ratio) and thermal expansion coefficient of an obtained aluminum titanate-based ceramics as well as D50 and D90 of used metal source starting materials were measured by the following methods.

(1) AT conversion ratio

The aluminum titanate conversion ratio (AT conversion ratio) was calculated from the integrated intensity (I$_T$) of the peak (titania rutile phase (110) face) appearing at a position of 2θ = 27.4° and the integrated intensity (I$_{AT}$) of the peak (aluminum magnesium titanate phase (230) face) appearing at a position of 28 = 33.7° in a powder x-ray diffraction spectrum according to the following formula:

$$\text{AT conversion ratio} = I_{AT}/(I_T + I_{AT}) \times 100 \ (\%).$$

(2) Thermal expansion coefficient

A shaped body of an aluminum titanate-based ceramics was fixed on a jig by a fixation resin and cut out in a rectangular parallelepiped shape of 13 mm in length, 4 mm in width, and 4 mm in thickness. Next, the cut out shaped body was heat treated by being heated at 200°C/h up to 1000°C to remove the fixation resin used for the cutting work. Regarding a specimen subjected to the heat treatment, the thermal expansion coefficient [K$^{-1}$] was calculated according to the following formula from the expansion coefficient of the specimen heated at 600°C/h from room temperature (25°C) to 1000°C by using a thermo-mechanical analyzer (TMA 6300 manufactured by SII Technology Inc.).

$$\text{Thermal expansion coefficient } [\text{K}^{-1}] = \text{expansion coefficient of}$$

$$\text{specimen}/975 \ [\text{K}]$$

Herein, the expansion coefficient of a specimen means:

$$\text{(length of specimen heated to } 1000°\text{C} \cdot \text{length of specimen before}$$

$$\text{heating } (25°\text{C}))/\text{length of specimen before heating } (25°\text{C})).$$

(3) Particle size distribution of metal source starting materials

The particle diameter corresponding to a cumulative percentage of 50 % on a volume basis (D50) and the particle diameter corresponding to a cumulative percentage of 90 % on a volume basis (D90) were measured by a laser diffraction particle size distribution measurement apparatus (Microtrac HRA (X-100) manufactured by Nikkiso Co., Ltd.).

Example 1

The following materials were used as the metal source starting materials.

(1) Titanium source powder

Titanium(IV) oxide (titania) powder (R-900 manufactured by DuPont, rutile type crystal, 42.4 g (47.2 parts by mass) D50: 0.49 $\mu$m, D90: 0.63 $\mu$m)

(2) Aluminum source powder

$\alpha$ Alumina powder (D50: 38.3 $\mu$m, D90: 59.2 $\mu$m)

39.0 g (43.6 parts by mass)

(3) Magnesium source powder

Magnesia powder (UC-95S manufactured by Ube Material Industries, Ltd., D50: 3.47 3.97 g (4.4 parts by mass) $\mu$m, D90: 4.76 $\mu$m)

(4) Silicon source powder

Glass frit (CK-0160M2 manufactured by Takara Standard Co., Ltd., D50: 5.43 $\mu$m, D90: 3.43 g (3.8 parts by mass) 18.5 $\mu$m)

(5) Copper source

Metal copper powder (manufactured by Wako Pure Chemical Industries, Ltd., D50: 25 0.89 g (1.0 part by mass) $\mu$m, D90: 47 $\mu$m)

The amount of the copper source was 1.1 parts by mass to 100 parts by mass in total of the titanium source powder expressed on titania [$TiO_2$] basis and the aluminum source powder expressed on alumina [$Al_2O_3$] basis.

The metal source starting materials (1) to (5) were loaded to a plastic container (inner volume 1 L) together with 500 g of alumina beads [diameter 15 mm]. Thereafter, the container was rotated at a rotating speed of 80 rpm for 4 hours by a ball mill to mix the starting materials in the container and obtain a starting material mixture.

A column-like shaped body with a diameter of 20 mm was produced by shaping 3 g of the obtained starting material mixture at a pressure of 0.3 t/cm$^2$ by a uniaxial press. Next, the shaped body was heated at a heating rate of 300°C/h up to 1450°C in a box type electric furnace and kept at the same temperature for 4 hours to carry out firing. Thereafter, the obtained body was left standing to cool to room temperature to obtain an aluminum titanate-based ceramics fired body of an aluminium magnesium titanate crystal. The obtained aluminum titanate-based ceramics had a composition formula: $Al_{2(1-x)}Mg_xTi_{(1+x)}O_5$ (a composition formula excluding copper) and the value for x was about 0.23.

The obtained fired body was pulverized in a mortar and subjected to powder diffraction spectrum measurement by a powder x-ray diffraction method to find that the powder showed a crystal peak of aluminum magnesium titanate. The AT conversion ratio of this powder was calculated to find that it was 100%. The thermal expansion coefficient of the obtained aluminum titanate-based ceramics fired body was $0.5 \times 10^{-6}$ (K$^{-1}$).

Example 2

An aluminum titanate-based ceramics fired body was obtained in the same manner as in Example 1, except that the amount of the copper source to be used was changed from 1.0 part by mass to 5.3 parts by mass. The obtained aluminum titanate-based ceramics had a composition formula: $Al_{2(1-x)}Mg_xTi_{(1+x)}O_5$ (a composition formula excluding copper) and the value for x was about 0.23.

The obtained fired body was pulverized in a mortar and subjected to powder diffraction spectrum measurement by a powder x-ray diffraction method to find that the powder showed a crystal peak of aluminum magnesium titanate. The AT conversion ratio of this powder was calculated to find that it was 100%. The thermal expansion coefficient of the obtained aluminum titanate-based ceramics fired body was $0.5 \times 10^{-6}$ (K$^{-1}$).

<Comparative Example 1>

An aluminum titanate-based ceramics fired body was obtained in the same manner as in Example 1, except that no copper source was used. The obtained aluminum titanate-based ceramics had a composition formula: $Al_{2(1-x)}Mg_x$-$Ti_{(1+x)}O_5$ (a composition formula excluding copper) and the value for x was about 0.23.

The obtained fired body was pulverized in a mortar and subjected to powder diffraction spectrum measurement by a powder x-ray diffraction method to find that the powder showed a crystal peak of aluminum magnesium titanate. The AT conversion ratio of this powder was calculated to find that it was 100%. The thermal expansion coefficient of the obtained aluminum titanate-based ceramics fired body was $2.5 \times 10^{-6}$ (K$^{-1}$).

INDUSTRIAL APPLICABILITY

By the process of the present invention, an aluminum titanate-based ceramics with a low thermal expansion coefficient, more preferably a thermal expansion coefficient close to zero (that is, having small change in volume by heat) can be obtained. The aluminum titanate-based ceramics of the present invention can be preferably used as a material for a DPF and the like.

**Claims**

1. A process for producing an aluminum titanate-based ceramics comprising a step of firing a starting material mixture containing a titanium source powder, an aluminum source powder, and a copper source.

2. The process for producing an aluminum titanate-based ceramics according to claim 1, wherein the copper source is a powder.

3. The process for producing an aluminum titanate-based ceramics according to claim 1 or 2, wherein the copper source is metal copper or copper oxide.

4. The process for producing an aluminum titanate-based ceramics according to claim 1, wherein the copper source is a metal copper powder.

5.   The process for producing an aluminum titanate-based ceramics according to any one of claims 1 to 4, wherein the starting material mixture contains 0.1 to 20 parts by mass of the copper source expressed on cupric oxide basis to 100 parts by mass in total of the titanium source powder expressed on titania basis and the aluminum source powder expressed on alumina basis.

6.   The process for producing an aluminum titanate-based ceramics according to any one of claims 1 to 5, wherein the starting material mixture further contains a magnesium source powder.

7.   The process for producing an aluminum titanate-based ceramics according to claim 6, wherein the starting material mixture contains 0.1 to 10 parts by mass of the magnesium source powder expressed on magnesia basis to 100 parts by mass in total of the titanium source powder expressed on titania basis and the aluminum source powder expressed on alumina basis.

8.   The process for producing an aluminum titanate-based ceramics according to any one of claims 1 to 7, wherein the starting material mixture further contains a silicon source powder.

9.   The process for producing an aluminum titanate-based ceramics according to claim 8, wherein the silicon source powder is glass frit.

10.  The process for producing an aluminum titanate-based ceramics according to claim 8 or 9, wherein the starting material mixture contains 0.1 to 20 parts by mass of the silicon source powder expressed on silica basis to 100 parts by mass in total of the titanium source powder expressed on titania basis and the aluminum source powder expressed on alumina basis.

11.  The process for producing an aluminum titanate-based ceramics according to any one of claims 1 to 10, wherein the starting material mixture contains 30 to 70 parts by mass of the titanium source powder expressed on titania basis to 100 parts by mass in total of the titanium source powder expressed on titania basis and the aluminum source powder expressed on alumina basis.

12.  The process for producing an aluminum titanate-based ceramics according to any one of claims 1 to 11, wherein the firing temperature is in a range of 1300 to 1650°C.

13.  An aluminum titanate-based ceramics containing a titanium element, an aluminum element, and a copper element.

14.  The aluminum titanate-based ceramics according to claim 13, wherein the copper element content expressed on cupric oxide basis is 0.1 to 20 parts by mass to 100 parts by mass in total of the titanium element content expressed on titania basis and the aluminum element content expressed on alumina basis.

15.  The aluminum titanate-based ceramics according to claim 13 or 14, further containing a magnesium element.

16.  The aluminum titanate-based ceramics according to claim 15, wherein the magnesium element content expressed on magnesia basis is 0.1 to 10 parts by mass to 100 parts by mass in total of the titanium element content expressed on titania basis and the aluminum element content expressed on alumina basis.

17.  The aluminum titanate-based ceramics according to any one of claims 13 to 16, further containing a silicon element.

18.  The aluminum titanate-based ceramics according to claim 17, wherein the silicon element content expressed on silica basis is 0.1 to 20 parts by mass to 100 parts by mass in total of the titanium element content expressed on titania basis and the aluminum element content expressed on alumina basis.

19.  The aluminum titanate-based ceramics according to any one of claims 13 to 18, wherein the titanium element content expressed on titania basis is 30 to 70 parts by mass to 100 parts by mass in total of the titanium element content expressed on titania basis and the aluminum element content expressed on alumina basis.

20.  The aluminum titanate-based ceramics according to any one of claims 13 to 19, being a fired product obtained by being fired at a temperature in a range of 1300 to 1650°C.

21.  The aluminum titanate-based ceramics according to any one of claims 13 to 20, being a shaped body having a honeycomb structure.

22. The aluminum titanate-based ceramics according to claim 21, wherein the shaped body is a diesel particulate filter.

## INTERNATIONAL SEARCH REPORT

| | International application No. |
|---|---|
| | PCT/JP2010/073882 |

**A. CLASSIFICATION OF SUBJECT MATTER**
*C04B35/46*(2006.01)i, *B01D39/20*(2006.01)i, *C01G23/00*(2006.01)i

According to International Patent Classification (IPC) or to both national classification and IPC

**B. FIELDS SEARCHED**

Minimum documentation searched (classification system followed by classification symbols)
C04B35/46, B01D39/20, C01G23/00

Documentation searched other than minimum documentation to the extent that such documents are included in the fields searched
Jitsuyo Shinan Koho          1922–1996   Jitsuyo Shinan Toroku Koho   1996–2011
Kokai Jitsuyo Shinan Koho   1971–2011   Toroku Jitsuyo Shinan Koho   1994–2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | JP 1-167282 A (Kanebo, Ltd.),<br>30 June 1989 (30.06.1989),<br>claims; page 3, upper left column, line 18 to<br>upper right column, line 8; upper right column,<br>lines 12 to 13; page 4, upper right column,<br>lines 10 to 13; upper right column, line 20 to<br>lower left column, line 1<br>(Family: none) | 1-3,5,8,<br>10-14,17-20<br>4,6,7,9,15,<br>16,21,22 |
| X | JP 4-228471 A (Bayer AG.),<br>18 August 1992 (18.08.1992),<br>claims; paragraph [0012]<br>& US 5153153 A          & EP 463437 A1<br>& DE 4029166 A | 1,3,5-8,<br>10-11,13-19 |

☒ Further documents are listed in the continuation of Box C.   ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 15 March, 2011 (15.03.11) | 05 April, 2011 (05.04.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/073882

C (Continuation).   DOCUMENTS CONSIDERED TO BE RELEVANT

| Category* | Citation of document, with indication, where appropriate, of the relevant passages | Relevant to claim No. |
|---|---|---|
| X | JP 1-308868 A  (Kanebo, Ltd.), 13 December 1989 (13.12.1989), claims; page 3, lower right column, lines 9 to 20; page 4, upper left column, line 2; page 7, lower left column, lines 9 to 15; table 5, no.31 (Family: none) | 1-3,6-8, 10-13,15-20 |
| Y | JP 2004-256384 A  (Matsushita Electric Industrial Co., Ltd.), 16 September 2004 (16.09.2004), claims; paragraph [0027] & US 2004/0151925 A1    & EP 1447391 A2 & CN 1524826 A          & CN 1915900 A | 4 |
| Y | WO 2009/154219 A1  (Sumitomo Chemical Co., Ltd.), 23 December 2009 (23.12.2009), claims; paragraphs [0013], [0038] & JP 2010-159197 A | 6,7,9,15,16, 22 |
| Y | JP 2008-239401 A  (Kyocera Corp.), 09 October 2008 (09.10.2008), claims; paragraphs [0026], [0045], [0046], [0048] (Family: none) | 21 |
| P,X | WO 2010/113869 A1  (Sumitomo Chemical Co., Ltd.), 07 October 2010 (07.10.2010), claims; paragraph [0033] (Family: none) | 1,2,6-13, 15-22 |

Form PCT/ISA/210 (continuation of second sheet) (July 2009)

**INTERNATIONAL SEARCH REPORT**

International application No.

PCT/JP2010/073882

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
```
   The invention in claim 1 does not have novelty and a special technical feature
since the inventions is described in the following documents 1 - 3, and
consequently, the invention in claim 1 does not comply with the requirement
of unity.
   The inventions in claims as indicated below are relevant to main invention.

   Claims 1 - 3, 5 - 12

                                        (continued to extra sheet)
```

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2010/073882

Continuation of Box No.III of continuation of first sheet(2)

Document 1: JP 1-167282 A (Kanebo, Ltd.), 30 June 1989 (30.06.1989), claims; page 3, upper left column, line 18 to upper right column, line 8; upper right column, lines 12 to 13; page 4, upper right column, lines 10 to 13; upper right column, line 20 to lower left column, line 1

Document 2: JP 4-228471 A (Bayer AG.), 18 August 1992 (18.08.1992), claims; paragraph [0012]

Document 3: JP 1-308868 A (Kanebo, Ltd.), 13 December 1989 (13.12.1989), claims; page 3, lower right column, lines 9 to 20; page 4, upper left column, line 2; page 7, lower left column, lines 9 to 15; table 5, no.31

Form PCT/ISA/210 (extra sheet) (July 2009)

**EP 2 520 554 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 05105704 A